# EUROPÄISCHE PATENTSCHRIFT

(11) **EP 2 915 989 B1**
(45) Veröffentlichungstag und Bekanntmachung des Hinweises auf die Patenterteilung: **19.04.2017**
(21) Anmeldenummer: 15153136.5
(22) Anmeldetag: 29.01.2015
(51) Int. Cl.: F02M 31/20, F02M 35/10, F02M 37/00, F02B 29/04, F01P 3/20

(54) **Ladeluftkühler für eine Brennkraftmaschine**
Charge air cooler for a combustion engine
Refroidisseur d'air de suralimentation pour un moteur à combustion

(30) Priorität: 04.03.2014 DE 102014203915
(43) Veröffentlichungstag der Anmeldung: 09.09.2015
(73) Patentinhaber: Volkswagen Aktiengesellschaft, 38440 Wolfsburg (DE)
(72) Erfinder: Volker, Cornelius, 38162 Cremlingen (DE); Lieker, Stephan, 31535 Neustadt / Rbge (DE)

(56) Entgegenhaltungen:
- EP-A1- 1 375 894
- EP-A1- 1 785 609
- WO-A1-2014/009537
- DE-A1- 2 502 633
- DE-A1- 10 102 483
- DE-A1- 10 331 849
- GB-A- 2 004 324
- US-A- 5 964 206
- US-B2- 6 857 263

## Beschreibung

Die Erfindung betrifft einen Ladeluftkühler für eine Brennkraftmaschine gemäß dem Oberbegriff des Anspruchs 1 sowie eine Brennkraftmaschine mit einem solchen Ladeluftkühler.

Ladeluftkühler werden an Brennkraftmaschinen verbaut, um die Temperatur des der Brennkraftmaschine zur Verbrennung von Kraftstoff zugeführten Frischgases zu reduzieren. Eine Temperaturerhöhung des Frischgases kann zum Beispiel durch eine Verdichtung des Frischgases mittels eines Abgasturboladers bedingt sein. Zur Reduzierung der Temperatur wird der Ladeluftkühler in der Frischgasstrecke der Brennkraftmaschine vor den Einlassventilen der Brennräume und gegebenenfalls hinter einem Verdichter eines Turboladers angeordnet.

Die Kühlung der Ladeluft hat den Vorteil, dass die Dichte des Frischgases erhöht wird und somit der Brennkraftmaschine bei gleichem Volumenstrom des Frischgases mehr Sauerstoff zur Verbrennung zugeführt wird. Dadurch kann mehr Kraftstoff verbrannt werden und die Leistungsabgabe der Brennkraftmaschine ist erhöht. Weiterhin wirkt sich eine geringere Temperatur des Frischgases positiv auf die thermische Belastung der Brennkraftmaschine und auf das Verbrennungsverhalten, zum Beispiel das Klopfen, aus.

Weiterhin sind Brennkraftmaschinen bekannt, die zur Kraftstoffversorgung eine Hochdruckpumpe zur Erzeugung des erforderlichen Einspritzdrucks aufweisen. Dabei befindet sich stromaufwärts der Hochdruckpumpe und stromabwärts des Kraftstofftanks eine Vorförderpumpe, welche den Kraftstoff aus dem Tank zu der Hochdruckpumpe fördert. Die Hochdruckpumpe verdichtet den Kraftstoff und leitet diesen dem Einspritzsystem der Brennkraftmaschine zu. Von der Brennkraftmaschine nicht benötigter, aber von der Hochdruckpumpe geförderter Kraftstoff, wird über eine Rückführleitung zum Tank transportiert (abgesteuert). Die durch die Verdichtung bedingte Temperaturerhöhung des Kraftstoffs wird durch die relativ kühle Rückführleitung und durch das kühlere Tankvolumen teilweise oder vollständig wieder aufgehoben, in vorteilhafter Weise kann dadurch eine Zersetzung des Kraftstoffs durch eine zu hohe Temperatur verhindert werden. Ein typisches derartiges Kraftstoffversorgungssystem einer Brennkraftmaschine zeigt das Dokument DE 10 2011 084 675 A1.

Aus GB 2 004 324 A ist ein Kühlsystem mit einem Ladeluftkühler gemäß dem Oberbegriff des Anspruchs 1 bekannt, der flüssigkeitsbasiert gekühlt werden kann. Das Kühlsystem umfasst ferner einen Wärmetauscher zum Kühlen eines Kühlmittels. Auf einen Kraftstoffkühler wird nicht Bezug genommen.

Aus DE 25 02 633 A1 ist eine Belüftungsanordnung für den Maschinenraum einer flüssigkeitsgekühlten, aufgeladenen Brennkraftmaschine mit einem von Kühlluft durchströmten Ladeluftkühler bekannt. Als Kühler zur Erzeugung der Kühlluft dient ein Ringkühler. Es wird vorgeschlagen, die Kühlluft zunächst durch einen Kraftstoffkühler, dann durch den Ladeluftkühler und zuletzt durch einen Ölkühler zu führen.

Aus DE 103 31 849 A1 ist ein Kraftstoffversorgungsystem mit einem Kraftstoffkühler aus einem Rohrkörper als tragendes Bauteil bekannt. Ein flüssigkeitsbasierter Ladeluftkühler ist in DE 103 31 849 A1 nicht beschrieben.
Das Dokument DE 199 07 267 B4 offenbart ein Kühlermodul für eine Brennkraftmaschine, welches einen ersten Kühler, bevorzugt einen Ölkühler, und einen zweiten Kühler, bevorzugt einen Ladeluftkühler, aufweist. Weiterhin werden ein dritter Kühler, bevorzugt ein Rückkühler, und ein vierter Kühler, bevorzugt ein Kraftstoffkühler, offenbart. Sämtliche Kühler sind in einem gemeinsamen Gehäuse angeordnet und werden von einer Kühlflüssigkeit durchströmt. In der bevorzugten Ausführungsform sind der Ladeluftkühler und der Kraftstoffkühler unmittelbar benachbart in dem gemeinsamen Gehäuse angeordnet

Aufgabe der vorliegenden Erfindung ist es, einen Ladeluftkühler für eine Brennkraftmaschine kostengünstig und bauraumsparend derart zu bauen, dass gleichzeitig eine Kraftstofftemperierung der Brennkraftmaschine erreicht
wird und der zu temperierende Kraftstoff von der zu kühlenden Ladeluft mit hoher Sicherheit räumlich getrennt ist.

Diese Aufgabe wird erfindungsgemäß durch einen Ladeluftkühler für eine Brennkraftmaschine mit den Merkmalen gemäß Anspruch 1 gelöst. Vorteilhafte Weiterbildungen der Erfindung sind in den abhängigen Ansprüchen charakterisiert.

Ein erfindungsgemäßer flüssigkeitsgekühlter Ladeluftkühler dient zur Änderung der Temperatur von Frischgas einer Brennkraftmaschine, wobei das Frischgas der Brennkraftmaschine zugeführt wird, um in Brennräumen der Brennkraftmaschine zusammen mit Kraftstoff als Gemisch verbrannt zu werden. Das Frischgas kann dabei aus der Umgebungsluft der Brennkraftmaschine, aber insbesondere auch aus einer Mischung aus Luft und zurückgeführtem Abgas der Brennkraftmaschine bestehen.

Der Ladeluftkühler umfasst eine oder mehrere Frischgaslagen und eine oder mehrere Wasserlagen, die in der Regel abwechselnd geschichtet angeordnet sind. Die Wasserlagen werden von Kühlwasser durchströmt, während die Frischgaslagen von dem Frischgas durchströmt werden. Hierdurch ist ein Wärmetauscher gebildet, der die Temperatur des Frischgases beeinflusst, in der Regel reduziert. Als Alternative für das Kühlwasser kann ein Fachmann die ihm bekannten und für Ladeluftkühler geeigneten Kühlflüssigkeiten verwenden. Die Lagen können alternativ auch als Schichten oder Layer bezeichnet werden.

Die Lagen erstrecken sich flächig, weisen also eine um ein Vielfaches der Höhe größere Erstreckung in Längen- und Breitenrichtung auf. Üblicherweise sind die Lagen eben ausgebildet und insbesondere als flache Quader geformt und in Höhenrichtung aneinander anliegend gestapelt.

Die Lagen, insbesondere der Lagenstapel, sind in einem Gehäuse aufgenommen, welches die Lagen und die diese durchströmenden Medien von der Umgebung trennen. An einem nach außen weisenden Wandabschnitt des Gehäuses eines erfindungsgemäßen Ladeluftkühlers ist unmittelbar oder mittelbar ein Kraftstoffkühler zur Änderung der Temperatur von Kraftstoff, welcher der Brennkraftmaschine zugeführt werden soll, angeordnet. In diesem Zusammenhang ist als nach innen weisend ein Wandabschnitt zu verstehen, dessen Oberfläche in Richtung einer angrenzenden Frischgas- oder Wasserlage zeigt. Dementsprechend ist als nach außen weisend ein Wandabschnitt zu verstehen, dessen Oberfläche von den Frischgas- und Wasserlagen abgekehrt ist, also in Richtung der Umgebung des Ladeluftkühlers zeigt.

Der erfindungsgemäße Ladeluftkühler ermöglicht somit eine Kühlung von Kraftstoff, indem ein Kraftstoffkühler unmittelbar an dem Ladeluftkühler angeordnet ist und von der Kühlleistung des Ladeluftkühlers partizipiert. Ein aufwendigerer, als selbständiger Einzelkühler ausgebildeter Kraftstoffkühler kann entfallen und kostengünstig sowie bauraumsparend an dem Ladeluftkühler angeordnet werden. Durch die Anordnung des Kraftstoffkühlers an einem nach außen weisenden Wandabschnitt des Gehäuses des Ladeluftkühlers, das heißt außerhalb des Gehäuses des Ladeluftkühlers, ist sichergestellt, dass bei einer ungewöhnlich auftretenden Leckage des Kraftstoffkühlers kein Kraftstoff in eine Frischgaslage des Ladeluftkühlers eindringen kann, da das Gehäuse des Ladeluftkühlers die Frischgaslagen wie beschrieben nach außen abdichtet. Bei einer Integration des Kraftstoffkühlers in das Gehäuse eines Ladeluftkühlers könnte Kraftstoff in eine Frischgaslage des Ladeluftkühlers eintreten, was eine unkontrollierte Zufuhr von Kraftstoff zu den Brennräumen der Brennkraftmaschine zur Folge hätte.

Der Kraftstoffkühler weist eine oder mehrere sich flächig erstreckende Kraftstofflagen auf, welche im Wesentlichen parallel zu den Wasserlagen des Ladeluftkühlers ausgerichtet sind. Der Kraftstoff durchströmt den Kraftstoffkühler demnach in einer oder mehreren Kraftstofflagen, welche eine um ein Vielfaches der Höhe größere Erstreckung in Längen- und Breitenrichtung aufweisen. Eine Lage kann beispielsweise derart gestaltet sein, dass der kraftstoffführende Bereich der Lage zwischen zwei Blechen gebildet ist, wobei zwischen den Blechen zusätzlich ein Turbulenzblech oder ein mäanderförmiger Blecheinleger, welcher einen mäanderförmigen Strömungsweg des Kraftstoffs in der Kraftstofflage formt, angeordnet ist. Hierdurch wird die Kraftstoffströmung in der Kraftstofflage turbulent und in sich durchmischt, wodurch die Leistung des Kraftstoffkühlers erhöht wird.

Durch die im Wesentlichen parallele Ausrichtung der Kraftstofflagen zu den Wasserlagen ist sichergestellt, dass die Lagen mittelbar mit ihren größten Oberflächen aneinander anliegen, wodurch die Kühlleistung des Kraftstoffkühlers nochmals gesteigert ist. Im Wesentlichen parallele Ausrichtung bedeutet, dass zumindest eine erste Ebene, in der sich eine Kraftstofflage erstreckt, zu zumindest einer zweiten Ebene, in der sich eine Wasserlage erstreckt, einen Winkel von höchstens 10°, bevorzugt 5° und besonders bevorzugt 1° aufweist.

Die eine oder mehreren Kraftstofflagen des erfindungsgemäßen Ladeluftkühlers sind zwischen einem Gehäuseblech des Kraftstoffkühlers und dem Wandabschnitt des Gehäuses des Ladeluftkühlers angeordnet. Der Kraftstoffkühler weist demnach ein eigenes Gehäuse auf, welches die Kraftstofflagen zumindest teilweise umschließt und gegen die Umgebung abdichtet. Eine Wand des Gehäuses des Kraftstoffkühlers ist durch den
Wandabschnitt des Gehäuses des Ladeluftkühlers ersetzt, da der Kraftstoffkühler erfindungsgemäß dort angeordnet ist.

Eine besonders effiziente Ausgestaltung des erfindungsgemäßen Ladeluftkühlers sieht es vor, dass der Kraftstoffkühler nur genau eine Kraftstofflage aufweist. Aufgrund der Anordnung des Kraftstoffkühlers an einem nach außen weisenden Wandabschnitt des Gehäuses des Ladeluftkühlers nimmt die durch die Wasserlagen des Ladeluftkühlers bedingte Kühlleistung des Kraftstoffkühlers bei einer Ausgestaltung des Kraftstoffkühlers mit mehreren Kraftstofflagen mit zunehmendem Abstand der Kraftstofflagen vom Ladeluftkühler ab. Deshalb ist es vorteilhaft, nur eine Kraftstofflage in dem Kraftstoffkühler anzuordnen und dadurch einen kostengünstigen Aufbau des Kraftstoffkühlers zu erhalten. Dieser Aufbau ist derart gestaltet, dass der Kraftstoffkühler beispielsweise die Form einer quaderförmigen Platte aufweisen kann, in die der mäanderförmige Verlauf der Kraftstoffströmung spanend eingearbeitet ist. Besonders kostengünstig kann eine Gestaltung des Kraftstoffkühlers aus einem Blech erzielt werden, in welches ein mäanderförmiger Kanal für die Führung des Kraftstoffs in der Kraftstofflage durch ein Umformverfahren in Form einer Sicke eingebracht wird.

Als weiterführende Ausgestaltung ist es dann möglich, den erfindungsgemäßen Ladeluftkühler insofern zu gestalten, als eine Kraftstofflage des Kraftstoffkühlers unmittelbar an dem Wandabschnitt des Gehäuses des Ladeluftkühlers anliegt und als auf der dem Kraftstoffkühler gegenüberliegenden Seite des Wandabschnitts des Gehäuses des Ladeluftkühlers unmittelbar eine Wasserlage des Ladeluftkühlers anliegt. Diese Maßnahme dient zur weiteren Erhöhung der Kühlleistung des Kraftstoffkühlers. Durch das Anliegen einer Wasserlage auf der Innenseite des Gehäuses des Ladeluftkühlers direkt gegenüberliegend der Stelle, an welcher der Kraftstoffkühler angeordnet ist, kann eine wesentlich größere Kühlleistung des Kraftstoffkühlers erzielt werden, als wenn dort eine Frischgaslage des Ladeluftkühlers angeordnet wäre.

Zusätzlich liegt eine Kraftstofflage des Kraftstoffkühlers unmittelbar an dem Wandabschnitt des Gehäuses des Ladeluftkühlers an, der Kraftstoff durchströmt den Kraftstoffkühler folglich derart, dass der Kraftstoff direkt an dem Gehäuse des Ladeluftkühlers entlangströmt. Zwischen Kraftstoff und Gehäuse des Ladeluftkühlers befindet sich keine Gehäusewand des Kraftstoffkühlers. Der den Kraftstoffkühler durchströmende Kraftstoff ist von einer Wasserlage des Ladeluftkühlers nur durch den Wandabschnitt des Gehäuses des Ladeluftkühlers getrennt.

Eine vorteilhafte Ausführungsform des erfindungsgemäßen Ladeluftkühlers zeichnet sich dadurch aus, dass der Kraftstoffkühler nicht von einer Kühlflüssigkeit durchströmt wird. Mit anderen Worten ist der Kraftstoffkühler kühlflüssigkeitsfrei ausgebildet. Der Kraftstoffkühler selbst wird nicht von der Kühlflüssigkeit des Ladeluftkühlers durchströmt und weist weiterhin auch keine Anschlüsse an einen eigenen Kühlflüssigkeitskreislauf auf. Hierdurch ist eine sehr kostengünstige Kühlung des Kraftstoffs der Brennkraftmaschine realisiert, da diese ohne Einbindung des Kraftstoffkühlers in ein Kühlflüssigkeitssystem umgesetzt werden kann. Darüber hinaus muss der Aufwand, die Kraftstofflagen von Kühlflüssigkeitslagen innerhalb des Kraftstoffkühlers abzudichten, bei dem erfindungsgemäßen Ladeluftkühler nicht geleistet werden.

Es hat sich gezeigt, dass eine vorteilhafte Herstellungsart des erfindungsgemäßen Ladeluftkühlers darin besteht, dass das Gehäuseblech des Kraftstoffkühlers mittels einer Schraubverbindung mit dem Wandabschnitt des Gehäuses des Ladeluftkühlers verbunden ist. Die Schraubverbindung benötigt Einschraubdome an dem Gehäuse des Ladeluftkühlers und in dem Falle, dass der Kraftstoffkühler kein ihn vollständig umschließendes, eigenes Gehäuse aufweist, eine Dichtung zwischen Kraftstoffkühler und Wandabschnitt des Gehäuses des Ladeluftkühlers. Alternativ und gegenüber der Schraubverbindung bevorzugt ist eine Lötverbindung, da hierdurch eine Abdichtung des Kraftstoffkühlers bereits durch das verbindende Lot sichergestellt sein kann. Als Alternative zu den Verbindungsarten kann auch eine Klammerverbindung gewählt werden, bei welcher an dem Gehäuse des Ladeluftkühlers angeordnete Klammerelemente über das Gehäuseblech greifen und dieses an den Wandabschnitt drücken. Bei dieser Klammerverbindung muss ebenfalls eine Dichtung zwischen Gehäuseblech und Wandabschnitt eingelegt werden.

Der erfindungsgemäße Ladeluftkühler kann besonders vorteilhaft an einer Brennkraftmaschine eingesetzt werden, wenn diese ein Dieselmotor ist und eine Kraftstoffhochdruckpumpe aufweist, die zumindest in einem Betriebsbereich der Brennkraftmaschine einen Kraftstoffdruck größer als 2000 bar, insbesondere größer als 2200 bar, erzeugt. Moderne Dieselmotoren werden in der Regel mit einem sehr hohen Kraftstoffdruck betrieben, wobei bei der Erzeugung dieses Drucks mittels einer Kraftstoffhochdruckpumpe zwangsweise eine Erwärmung des Kraftstoffs eintritt. In diesem Zusammenhang wurde festgestellt, dass bei typischen verfügbaren Dieselkraftstoffen ab einer Kraftstofftemperatur von 180 °C eine ungewünschte und nachteilige Zersetzung des Kraftstoffs stattfinden kann. Diesem Effekt kann durch eine Brennkraftmaschine mit einem erfindungsgemäßen Ladeluftkühler effizient entgegengewirkt werden.
Weist die Brennkraftmaschine einen Kraftstoffzulauf von einem Kraftstofftank zur Brennkraftmaschine, jedoch keinen Kraftstoffrücklauf von der Brennkraftmaschine zu dem Tank auf, ergeben sich weitere Auswirkungen auf die Temperatur des Kraftstoffs. Wie eingangs beschrieben, lässt sich bei einer Brennkraftmaschine mit einer Kraftstoffhochdruckpumpe durch die Absteuerung von verdichtetem, nicht benötigten Kraftstoff über eine Rückführleitung zum Tank eine Kühlwirkung auf den Kraftstoff erzielen.

Bei einer Brennkraftmaschine ohne Kraftstoffrücklauf wird Kraftstoff von einer Tankpumpe bedarfsgesteuert aus einem Kraftstofftank über einen Kraftstofffilter zu der Kraftstoffhochdruckpumpe gefördert. Diese setzt den Kraftstoff unter hohen Druck und führt ihn einem Kraftstoffrail, auch als Verteilerleiste bezeichnet, zu. Das Kraftstoffrail weist ein Druckregelventil auf und ist somit in der Lage, einen Solldruck in dem Kraftstoffrail durch Absteuern geringer Kraftstoffmengen einzuregeln. Der abgesteuerte Kraftstoff wird auf kurzem Weg vor dem Kraftstofffilter wieder der Kraftstoffversorgung zugeführt. Dadurch ist ein motornaher Kreislauf für Kraftstoff gebildet, welcher keine ausreichende Kühlwirkung auf den Kraftstoff ausüben kann.

Bei einer derartigen rücklauflosen Brennkraftmaschine kann die Zersetzung des Kraftstoffs mit geringem Aufwand durch die Anordnung eines erfindungsgemäßen Ladeluftkühlers mit Kraftstoffkühler verhindert werden. Dazu kann der Kraftstoffkühler beispielweise in der Absteuerleitung zwischen Kraftstoffrail und Kraftstofffilter angeordnet sein. Die Anwendung des erfindungsgemäßen, flüssigkeitsgekühlten Ladeluftkühlers ist jedoch nicht auf eine Anwendung in einer Brennkraftmaschine ohne Rücklauf zum Tank beschränkt.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
Figur 1 Eine beispielhafte Prinzipdarstellung des Kraftstoffsystems einer Brennkraftmaschine mit erfindungsgemäßem Ladeluftkühler
Figur 2 Eine perspektivische Darstellung einer Ausführungsform eines erfindungsgemäßen Ladeluftkühlers
Figur 3 Eine Schnittdarstellung einer Ausführungsform eines erfindungsgemäßen Ladeluftkühlers
Figur 4 Eine perspektivische Darstellung einer Ausführungsform eines Kraftstoffkühlers eines erfindungsgemäßen Ladeluftkühlers

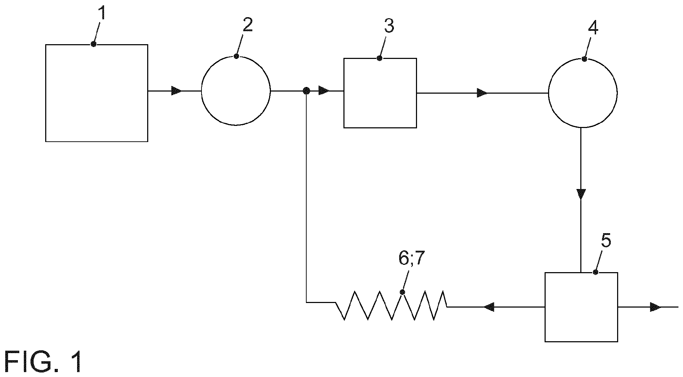

Die Figur 1 zeigt eine beispielhafte Prinzipdarstellung eines kraftstoffrücklauffreien Kraftstoffsystems einer Brennkraftmaschine, bei welcher ein erfindungsgemäßer Ladeluftkühler besonders vorteilhaft eingesetzt werden kann. Die Brennkraftmaschine weist einen Kraftstofftank 1 auf, in welchem sich der für den Betrieb der Brennkraftmaschine notwendige Kraftstoff befindet. Stromabwärts des Kraftstofftanks 1 ist eine Tankpumpe 2 angeordnet, welche den Kraftstoff aus dem Kraftstofftank 1 fördert, insbesondere bedarfsweise gesteuert oder geregelt fördert. Bedarfsweise bedeutet, dass die Tankpumpe 2 nicht in einem ständigen Förderbetrieb läuft, sondern nur dann betrieben wird, wenn dem Kraftstoffsystem Kraftstoff zugeführt werden muss. Hierdurch wird Energie gespart, da diese nur in den Betriebsphasen der Tankpumpe 2 von dieser aufgenommen wird.

Stromabwärts der Tankpumpe 2 befindet sich zunächst ein Kraftstofffilter 3 und anschließend eine Kraftstoffhochdruckpumpe 4, welche in einem Motorblock (nicht gezeigt) der Brennkraftmaschine angeordnet ist. Die Kraftstoffhochdruckpumpe 4 setzt den Kraftstoff unter den für die Einspritzung benötigten, hohen Kraftstoffdruck und führt den Kraftstoff einem Kraftstoffrail 5 zu. Das Kraftstoffrail 5 speichert den unter hohem Druck stehenden Kraftstoff und verteilt diesen zu den in der Regel mehreren Einspritzelementen der Brennkraftmaschine. Ein vorgegebener Kraftstoffsolldruck wird in dem Kraftstoffrail 5 durch Absteuerung von Kraftstoff über ein nicht gezeigtes Druckregelventil eingestellt.

Der abgesteuerte Kraftstoff weist durch die Verdichtung in der Kraftstoffhochdruckpumpe eine gegenüber der Temperatur des Kraftstoffs in dem Kraftstofftank 1 erhöhte Temperatur auf. Stromabwärts des Kraftstoffrails 5 befindet sich deshalb ein Kraftstoffkühler 6 eines erfindungsgemäßen Ladeluftkühlers 7, welcher die erhöhte Temperatur reduziert. Stromabwärts des Kraftstoffkühlers 6 wird der abgesteuerte Kraftstoff dem Kraftstoffsystem vor dem Kraftstofffilter 3 wieder zugeführt. Auf diese Weise ist ein Kreislauf gebildet.

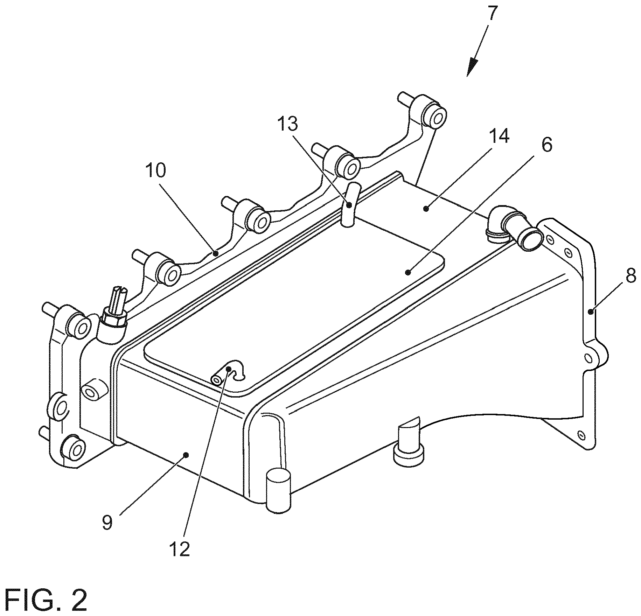

Die Figur 2 zeigt eine perspektivische Darstellung einer Ausführungsform eines erfindungsgemäßen Ladeluftkühlers 7. Der Ladeluftkühler 7 weist einen Ladelufteintritt 8 auf, über welchen Frischgas der Brennkraftmaschine dem Ladeluftkühler 7 zugeführt wird. Dem Ladelufteintritt 7 ist das Lagenpaket 9 zugeordnet, welches in einem Gehäuse die in Figur 2 nicht erkennbaren Frischgaslagen und Wasserlagen des Ladeluftkühlers 7 aufnimmt. An der Rückseite des Lagenpakets 9 ist ein Ladeluftaustritt 10 angeordnet. Der Ladeluftaustritt 10 dient in der Regel der Zuführung des Frischgases zu den Brennräumen der Brennkraftmaschine.

Auf einem nach außen weisenden Wandabschnitt 14 des Gehäuses des Lagenpakets 9 des Ladeluftkühlers 7 ist erfindungsgemäß der Kraftstoffkühler 6 angeordnet. Der zu kühlende Kraftstoff wird dem Kraftstoffkühler 6 über einen Kraftstoffeintritt 12 zugeführt und verlässt diesen anschließend wieder über einen Kraftstoffaustritt 13.

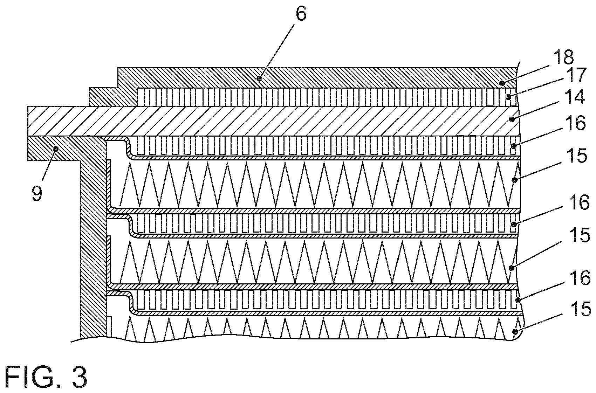

Die Figur 3 zeigt eine Schnittdarstellung einer Ausführungsform eines erfindungsgemäßen Ladeluftkühlers 7. Das Lagenpaket 9 beinhaltet in seinem Gehäuse abwechselnd geschichtete Wasserlagen 16 und Frischgaslagen 15. Die Frischgaslagen 15 werden von Frischgas der Brennkraftmaschine durchströmt, während die Wasserlagen 16 an ein Kühlkreislaufsystem angeschlossen sind und von einer Kühlflüssigkeit durchströmt werden. In den Wasser- und Frischgaslagen 16 und 15 sind gefaltete Bleche erkennbar, welche für eine turbulente Durchströmung der Lagen sorgen. Dadurch ist ein Wärmetauscher gebildet, wobei das Frischgas in der Regel durch die Kühlflüssigkeit gekühlt wird.

An dem nach außen weisenden Wandabschnitt 14 des Gehäuses des Ladeluftkühlers 7 ist der Kraftstoffkühler 6 angeordnet. Gemäß der in Figur 3 dargestellten Ausführungsform des Kraftstoffkühlers 6 besteht dieser aus einem Gehäuseblech 18, welches eine Kraftstofflage 17 teilweise umschließt. Die Kraftstofflage 17 weist ebenfalls ein gefaltetes Blech auf, wodurch eine Verwirbelung und turbulente Durchströmung der Kraftstofflage 17 erzielt ist. Das Gehäuseblech 18 umschließt die Kraftstofflage 17 nicht vollständig, da eine Begrenzungswand der Kraftstofflage 17 durch den Wandabschnitt 14 gebildet ist. Dies hat den Vorteil, dass die Kraftstofflage 17 unmittelbar an dem Wandabschnitt 14 anliegt und dadurch die Kühlleistung des Kraftstoffkühlers 6 erhöht ist. Weiterhin ist bemerkenswert, dass sich unmittelbar an die dem Wandabschnitt 14 gegenüberliegende Seite, also der Innenseite, eine Wasserlage 16 des Ladeluftkühlers 7 anschließt, wodurch die Kühlleistung des Kraftstoffkühlers 6 nochmals erhöht ist.

Gemäß diesem Ausführungsbeispiel ist das Gehäuseblech 18 des Kraftstoffkühlers 6 auf den Wandabschnitt 14 aufgelötet, wodurch eine sichere Verbindung und weiterhin eine Abdichtung der Kraftstofflage 17 gewährleistet ist.

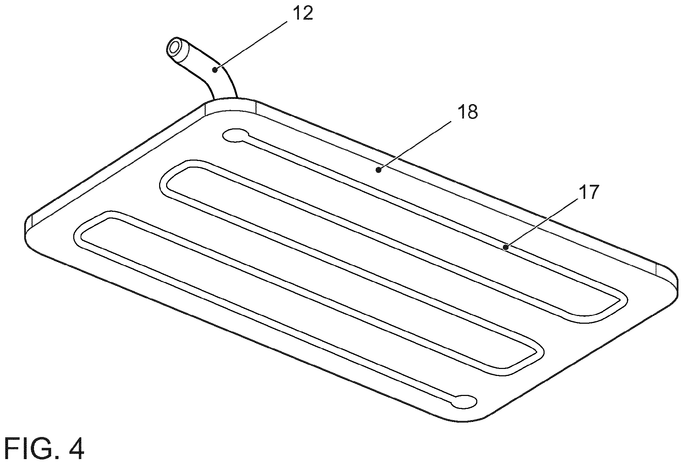

Die Figur 4 zeigt eine perspektivische Darstellung einer Ausführungsform eines Kraftstoffkühlers 6 eines erfindungsgemäßen Ladeluftkühlers 7. Die Betrachtungsrichtung ist derart gewählt, dass die sichtbare Oberfläche des Kraftstoffkühlers 6 diejenige Fläche ist, welche bei Anordnung des Kraftstoffkühlers 6 an dem Wandabschnitt 14 unmittelbar an dem Wandabschnitt 14 anliegt. Diese Ausführungsform des Kraftstoffkühlers 6 zeigt einen Kraftstoffkühler 6, bei welchem das Gehäuseblech 18 eine quaderförmige Gestalt aufweist. In das Gehäuseblech 18 ist die Kraftstofflage 17 als mäanderförmiger Leitungsweg spanend eingearbeitet. Weiterhin ist der Kraftstoffeintritt 12 als Stutzen zu erkennen, welcher den außerhalb des Kraftstoffkühlers 6 zugeführten Kraftstoff der Kraftstofflage 17 zuleitet.

Eine weitere, nicht zeichnerisch dargestellte Ausführungsform des Kraftstoffkühlers 6 besteht darin, den in Figur 4 erkennbaren, mäanderförmigen Leitungsweg als Sicke in das Gehäuseblech 18 einzuprägen.

### Bezugszeichenliste

- 1: Kraftstofftank
- 2: Tankpumpe
- 3: Kraftstofffilter
- 4: Kraftstoffhochdruckpumpe
- 5: Kraftstoffrail
- 6: Kraftstoffkühler
- 7: Ladeluftkühler
- 8: Ladelufteintritt
- 9: Lagenpaket
- 10: Ladeluftaustritt
- 12: Kraftstoffeintritt
- 13: Kraftstoffaustritt
- 14: Wandabschnitt
- 15: Frischgaslage
- 16: Wasserlage
- 17: Kraftstofflage
- 18: Gehäuseblech

## Patentansprüche

1. Flüssigkeitsgekühlter Ladeluftkühler (7) zur Änderung der Temperatur von Frischgas einer Brennkraftmaschine, mit einer oder mehreren Frischgaslagen (15) und einer oder mehreren Wasserlagen (16), wobei sich die Frischgaslagen (15) und die Wasserlagen (16) flächig erstrecken und von einem Gehäuse des Ladeluftkühlers (7) aufgenommen sind,
**dadurch gekennzeichnet,**
**dass** an einem nach außen weisenden Wandabschnitt (14) des Gehäuses des Ladeluftkühlers (7) ein Kraftstoffkühler (6) zur Änderung der Temperatur von Kraftstoff, welcher der Brennkraftmaschine zugeführt werden soll, angeordnet ist, wobei der Kraftstoffkühler (6) eine oder mehrere sich flächig erstreckende Kraftstofflagen (17) aufweist, welche im Wesentlichen parallel zu den Wasserlagen (16) des Ladeluftkühlers (7) ausgerichtet sind, und wobei die eine oder mehreren Kraftstofflagen (17) zwischen einem Gehäuseblech (18) des Kraftstoffkühlers (6) und dem Wandabschnitt (14) des Gehäuses des Ladeluftkühlers (7) angeordnet sind.

2. Flüssigkeitsgekühlter Ladeluftkühler (7) nach Anspruch 1,
**dadurch gekennzeichnet,**
**dass** der Kraftstoffkühler (6) nur eine Kraftstofflage (17) aufweist.

3. Flüssigkeitsgekühlter Ladeluftkühler (7) nach einem der vorhergehenden Ansprüche,
**dadurch gekennzeichnet,**
**dass** eine Kraftstofflage (17) des Kraftstoffkühlers (6) unmittelbar an dem Wandabschnitt (14) des Gehäuses des Ladeluftkühlers (7) anliegt und dass auf der dem Kraftstoffkühler (6) gegenüberliegenden Seite des Wandabschnitts (14) des Gehäuses des Ladeluftkühlers (7) unmittelbar eine Wasserlage (16) des Ladeluftkühlers (7) anliegt.

4. Flüssigkeitsgekühlter Ladeluftkühler (7) nach einem der vorhergehenden Ansprüche,
**dadurch gekennzeichnet,**
**dass** der Kraftstoffkühler (6) nicht von einer Kühlflüssigkeit durchströmt wird.

5. Flüssigkeitsgekühlter Ladeluftkühler (7) nach einem der Ansprüche 1 bis 4,
**dadurch gekennzeichnet,**
**dass** das Gehäuseblech (18) des Kraftstoffkühlers (6) mittels einer Lötverbindung oder einer Schraubverbindung oder einer Klammerverbindung mit dem Wandabschnitt (14) des Gehäuses des Ladeluftkühlers (7) verbunden ist.

6. Flüssigkeitsgekühlter Ladeluftkühler (7) nach einem der Ansprüche 1 bis 5,
**dadurch gekennzeichnet,**
**dass** in den Kraftstofflagen (17) Turbulenzbleche oder mäanderförmige Blecheinleger angeordnet sind.

7. Brennkraftmaschine mit einem Ladeluftkühler (7) nach einem der vorhergehenden Ansprüche,
**dadurch gekennzeichnet,**
**dass** die Brennkraftmaschine ein Dieselmotor ist und eine Kraftstoffhochdruckpumpe (4) aufweist, die zumindest in einem Betriebsbereich der Brennkraftmaschine einen Kraftstoffdruck größer als 2000 bar, insbesondere größer als 2200 bar, erzeugt.

8. Brennkraftmaschine nach Anspruch 7,
**dadurch gekennzeichnet,**
**dass** die Brennkraftmaschine einen Kraftstoffzulauf von einem Kraftstofftank (1) zur Brennkraftmaschine, jedoch keinen Kraftstoffrücklauf von der Brennkraftmaschine zu dem Kraftstofftank (1) aufweist.

## Claims

1. Liquid-cooled intercooler (7) for changing the temperature of fresh gas of an internal combustion engine, having one or more fresh gas layers (15) and one or more water layers (16), the fresh gas layers (15) and the water layers (16) extending in a flat manner and being received by a housing of the intercooler (7), **characterized in that** a fuel cooler (6) for changing the temperature of fuel which is to be fed to the internal combustion engine is arranged on a wall section (14) of the housing of the intercooler (7), which wall section (14) points towards the outside, the fuel cooler (6) having one or more fuel layers (17) which extend in a flat manner and are oriented substantially parallel to the water layers (16) of the intercooler (7), and the one or more fuel layers (17) being arranged between a housing plate (18) of the fuel cooler (6) and the wall section (14) of the housing of the intercooler (7).

2. Liquid-cooled intercooler (7) according to Claim 1, **characterized in that** the fuel cooler (6) has only one fuel layer (17).

3. Liquid-cooled intercooler (7) according to either of the preceding claims, **characterized in that** one fuel layer (17) of the fuel cooler (6) bears directly against the wall section (14) of the housing of the intercooler (7), and **in that** one water layer (16) of the intercooler (7) bears directly on that side of the wall section (14) of the housing of the intercooler (7) which lies opposite the fuel cooler (6).

4. Liquid-cooled intercooler (7) according to one of the preceding claims, **characterized in that** the fuel cooler (6) is not flowed through by a cooling liquid.

5. Liquid-cooled intercooler (7) according to one of Claims 1 to 4, **characterized in that** the housing plate (18) of the fuel cooler (6) is connected to the wall section (14) of the housing of the intercooler (7) by means of a brazed connection or a screwed connection or a clipped connection.

6. Liquid-cooled intercooler (7) according to one of Claims 1 to 5, **characterized in that** turbulence plates or serpentine-shaped sheet metal inserts are arranged in the fuel layers (17).

7. Internal combustion engine having an intercooler (7) according to one of the preceding claims, **characterized in that** the internal combustion engine is a diesel engine and has a high-pressure fuel pump (4) which generates a fuel pressure of greater than 2000 bar, in particular of greater than 2200 bar, at least in an operating range of the internal combustion engine.

8. Internal combustion engine according to Claim 7, **characterized in that** the internal combustion engine has a fuel inflow from a fuel tank (1) to the internal combustion engine, but does not have a fuel return line from the internal combustion engine to the fuel tank (1).

## Revendications

1. Refroidisseur d'air de suralimentation (7) refroidi par un liquide, pour modifier la température du gaz frais d'un moteur à combustion interne, comprenant une ou plusieurs couches de gaz frais (15) et une ou plusieurs couches d'eau (16), les couches de gaz frais (15) et les couches d'eau (16) s'étendant à plat et étant reçue par un boîtier du refroidisseur d'air de suralimentation (7),
**caractérisé en ce**
**qu'**un refroidisseur de carburant (6) est disposé au niveau d'une portion de paroi (14) du boîtier du refroidisseur d'air de suralimentation (7) tournée vers l'extérieur pour faire varier la température du carburant qui doit être acheminé au moteur à combustion interne, le refroidisseur de carburant (6) présentant une ou plusieurs couches de carburant (17) s'étendant à plat, qui sont orientées essentiellement parallèlement aux couches d'eau (16) du refroidisseur d'air de suralimentation (7), et ladite une ou plusieurs couches de carburant (17) étant disposées entre une tôle de boîtier (18) du refroidisseur de carburant (6) et la portion de paroi (14) du boîtier du refroidisseur d'air de suralimentation (7).

2. Refroidisseur d'air de suralimentation (7) refroidi par un liquide selon la revendication 1, **caractérisé en ce que**
le refroidisseur de carburant (6) présente seulement une couche de carburant (17).

3. Refroidisseur d'air de suralimentation (7) refroidi par un liquide selon l'une quelconque des revendications précédentes,
**caractérisé en ce**
**qu'**une couche de carburant (17) du refroidisseur de carburant (6) s'applique directement contre la portion de paroi (14) du boîtier du refroidisseur d'air de suralimentation (7) et en ce qu'une couche d'eau (16) du refroidisseur d'air de suralimentation (7) s'applique directement du côté de la portion de paroi (14) du boîtier du refroidisseur d'air de suralimentation (7) opposé au refroidisseur de carburant (6).

4. Refroidisseur d'air de suralimentation (7) refroidi par un liquide selon l'une quelconque des revendications précédentes,
**caractérisé en ce que**
le refroidisseur de carburant (6) n'est pas parcouru par un liquide de refroidissement.

5. Refroidisseur d'air de suralimentation (7) refroidi par un liquide selon l'une quelconque des revendications 1 à 4,
**caractérisé en ce que**
la tôle de boîtier (18) du refroidisseur de carburant (6) est connectée au moyen d'une liaison par brasage ou d'une liaison par vissage ou d'une liaison par agrafage à la portion de paroi (14) du boîtier du refroidisseur d'air de suralimentation (7).

6. Refroidisseur d'air de suralimentation (7) refroidi par un liquide selon l'une quelconque des revendications 1 à 5,
**caractérisé en ce que**
des tôles de turbulences ou des inserts en tôle en forme de méandres sont disposés dans les couches de carburant (17).

7. Moteur à combustion interne comprenant un refroidisseur d'air de suralimentation (7) selon l'une quelconque des revendications précédentes,
**caractérisé en ce que**
le moteur à combustion interne est un moteur diesel et présente une pompe à carburant haute pression (4) qui, au moins dans une plage de fonctionnement du moteur à combustion interne, génère une pression de carburant supérieure à 2000 bars, en particulier supérieure à 2200 bars.

8. Moteur à combustion interne selon la revendication 7,
**caractérisé en ce que**
le moteur à combustion interne présente une alimentation en carburant depuis un réservoir de carburant (1) au moteur à combustion interne, mais pas de retour de carburant du moteur à combustion interne au réservoir de carburant (1).
